# EUROPEAN PATENT APPLICATION

(11) **EP 0 698 535 A2**
(43) Date of publication of application: **28.02.1996**
(21) Application number: 95305932.6
(22) Date of filing: 24.08.1995
(51) Int. Cl.: B60R 21/26, B01D 39/20, B01D 46/24

(54) **Air bag inflator with flow deflecting filter**

(30) Priority: 26.08.1994 US 296965
(71) Applicant: MORTON INTERNATIONAL, INC., Chicago, Illinois 60606 (US)
(72) Inventor: Rink, Linda M., Liberty, Utah 84310 (US); Letendre, Guy R., Ogden, Utah 84403 (US); Deppert, Thomas M., Brigham City, Utah 84302 (US)
(74) Representative: Warren, Keith Stanley

(57) **Abstract**

An air bag inflator (200) includes a gas filter (244) for entrapping contaminants and cooling gas generated from gas generating material (218). The filter includes a body of porous filter medium receiving a flow of gas from an entrance side for movement on tortuous individual flow passages (F) through the filter toward an exit side. A non-porous flow deflector (244A) is provided in the filter for turning or deflecting the gas flow path away from a generally straight path between the entrance and exit sides in order to provide a more uniform gas velocity and better diffusion and distribution of the gas flow over the entire available flow cross-section of the filter. The filter may include a coarse porosity first section (245) for entrapping larger particulates from the generated gas followed by a fine porosity second section (247) for general filtering and cooling of the gas flow.

## Description

### BACKGROUND OF THE INVENTION

### 1. Field of the Invention

The present invention relates to air bag inflators and more particularly to a new and improved air bag inflator having a unitary, porous filter of reticulated material having a flow deflector therein for changing the direction of the gas flow through the filter.

### 2. Background of the Prior Art

A common problem in air bag inflators relates to the formation of high velocity combustion gas jets which flow straight out through combustion chamber exit ports into a filter medium causing burn holes or enlargement of the filter openings so that adequate filtering and cooling of the generated gas is hindered.

Moreover, various types of filter packs in air bag inflators do not adequately diffuse and distribute the gas flow over all of the available flow cross-section of the filter but instead concentrate the flow in small, high velocity flow areas developing burn holes and reducing the filtering efficiency.

### OBJECTS OF THE INVENTION

It is an object of the present invention to provide a new and improved air bag inflator and more particularly an inflator having a new and improved filter for entrapping contaminants from the generated gas and cooling the gas, which filter is capable of turning or deflecting the direction of gas flow through the filter so that more uniform and lower gas velocities are attained and resulting in a lengthening of the flow path for more effective filtering action.

Still another object of the present invention is to provide a new and improved filter for an air bag inflator having a flow deflector therein for changing the direction of gas flow through the inflator filter so that burn through and holes in the filter are not generated because of excessively high velocity gas flow.

Yet another object of the present invention is to provide a new and improved filter for an air bag inflator which provides for generally lower gas flow velocity, better distribution and diffusion of the gas flow over the entire available flow cross-section of the filter so that more effective filtering and cooling action is attained.

Another object of the present invention is to provide a new and improved filter of the character described formed of reticulated porous material and more particularly a filter having separate sections of coarse and fine porosity whereby heavier particulates are filtered out first in the coarse section of the filter and thereafter the gas flow is turned or deflected to pass through the fine porosity section of the filter for effective and efficient filtering and cooling before reaching an air bag during a deployment cycle.

### BRIEF SUMMARY OF THE PRESENT INVENTION

The foregoing and other objects of the present invention are accomplished in a new and improved air bag inflator including a housing for containing gas generating material and having an outer wall with a plurality of diffuser ports for discharging the rapidly generated gases to deploy and fill an air bag. A unitary gas filter is mounted in the housing between gas generating material and the diffuser ports for collecting and entrapping contaminants from the gas and for cooling the gas before it enters the air bag. The filter includes an annular body of porous filter medium having a gas receiving side and a gas discharging side adjacent the diffuser ports of the housing and the filter defines a plurality of tortuous gas flow paths between the gas generating material and the diffuser ports for entrapping contaminants and cooling the gas. A flow deflector is provided on an inlet side of the body of the filter for changing the direction or turning the gas flow to provide more uniform diffusion of the gas flow through the available flow cross-section of the filter.

### BRIEF DESCRIPTION OF THE DRAWINGS

For a better understanding of the present invention, reference should be had to the following detailed description taken in conjunction with the drawings, in which:
FIG. 1 is a transverse cross-sectional view of a new and improved air bag inflator including a new and improved filter in accordance with the present invention having a flow deflector incorporated therein for deflecting or turning the gas flow for developing a more uniform distribution over the available flow cross-section of the filter; and
FIG. 2 is a transverse cross-sectional view of another embodiment of a new and improved air bag inflator having another embodiment of a new and improved filter constructed in accordance with the features of the present invention.

### DETAILED DESCRIPTION OF A PREFERRED EMBODIMENT OF THE INVENTION

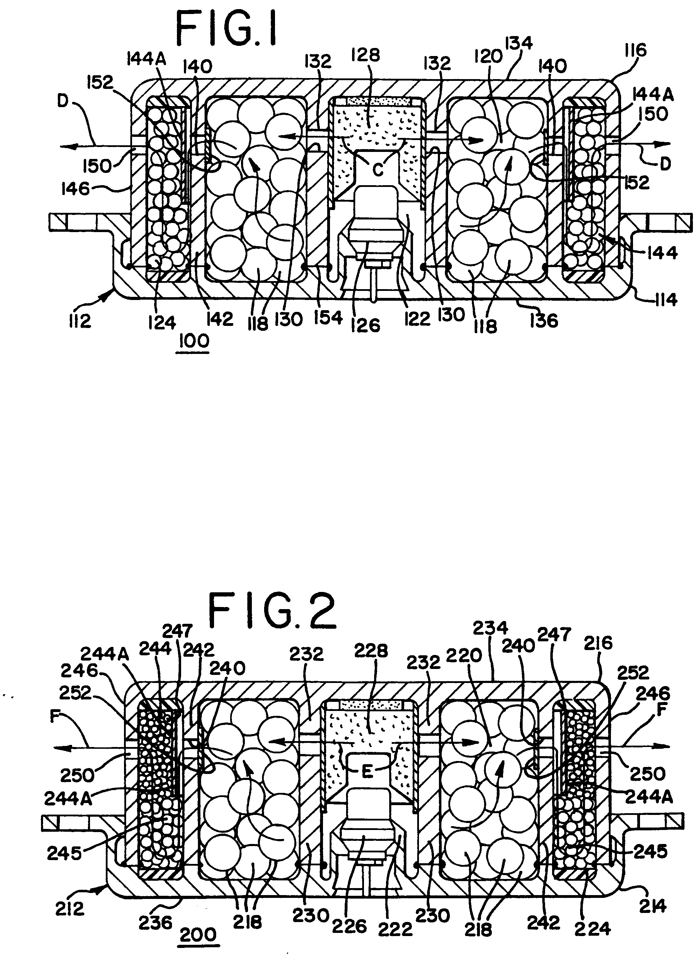

Referring now more particularly to the drawings, in FIG. 1 is illustrated a new and improved air bag inflator 100 in accordance with the features of the present invention includes a metal housing or canister 112 formed with a lower base 114 and a diffuser or cover 116 joined together to form an airtight enclosure for containing a selected quantity of solid, gas generating material 118 such as sodium azide containing pellets or wafers, or non-azide and other types of gas generating materials which are contained in an annular, main combustion chamber 120. The combustion chamber 120 is formed between a centrally disposed, cylindrical ignition chamber 122 and an outer, annular filter medium containing chamber 124.

The centrally disposed ignition chamber 122 normally contains an electrically activatable ignition squib 126 and a charge of ignition enhancing material 128 such as a mixture of boron and potassium nitrate which is ignited by the squib 126 to cause hot ignition combustion products to flow rapidly outwardly through a plurality of ignition ports 130 formed in an inner wall 132 of cylindrical shape joined between upper and lower, circular-shaped top and bottom walls 134 and 136, respectively, of the diffuser 116 and the base 114. The ignition ports 130 are circumferentially spaced apart around the periphery of ignition chamber inner wall 132 to direct the ignition enhancing combustion products from the ignition squib 126 and the enhancing material 128 outwardly to rapidly ignite the gas generating pellets 118 in the annular combustion chamber 120 surrounding the ignition chamber as indicated by the arrows C.

The hot ignition combustion products from the ignition enhancing material 128 and the squib 126 cause the gas generant tablets 118 to rapidly ignite and develop a calculated quantity of hot, air bag inflation gas which flows outwardly as indicated by the arrows D through a plurality of circumferentially spaced apart combustion ports 140 formed in an intermediate, combustion chamber wall 142 of cylindrical shape in coaxial alignment with and surrounding the inner ignition chamber wall 132. The hot gases flowing outwardly through the wall ports 140 of the intermediate combustion chamber wall 142 pass into an annular flow deflecting filter 144 in accordance with the features of the present invention that is mounted in the filter chamber 124 and surrounding the combustion chamber wall 142.

The housing 112 includes an outer cylindrical side wall 146 extending between the circular top wall 134 and bottom wall 136 to complete a sealed enclosure. The outer side wall 146 is formed with a plurality of circumferentially spaced apart, gas exit diffuser ports 150 for directing the high temperature, high pressure flow of generating gas outwardly of the canister 12 to rapidly inflate an associated air bag (not shown). Inside of the ring of combustion wall ports 140 on the combustion wall 142 there is provided a thin, adhesive foil type sealing strip 152 for sealing the ports against outside contaminants during the life of the inflator 100 until activated. After all of the internal components of the inflator 100 are in place, the base 114 and the upper cover 116 are welded or otherwise joined together, usually by an inertia weld on a common plane (FIG. 1) indicated by the reference numeral 154.

One of the problems commonly associated with prior art inflators results from the creation of a plurality of high velocity, high temperature gas flow jets directly adjacent the ports that are commonly found in a combustion wall and an outer wall of an inflator. These ports are often aligned on a common axis as shown in U.S. Patent No. 4,943,086. In screen type filters as shown in U.S. Patent No. 4,943,086, there may be burn out areas if a flow deflector is not used. The gas jets move through a filter between the walls at such a high velocity and temperature that burn holes or areas of burn out may be rapidly developed. This is especially true with nonazide gas generant material which produces high temperature molten liquid slag. When a unitary, drop-in type, filter formed of homogeneous, cellular, porous, high temperature resistant reticulated materials such as ceramics, metals, metal alloys and vitreous bonded aggregates, etc., as disclosed in copending U.S. Patent applications Serial No. 08/114,211, filed August 30, 1993, and Serial No. 08/280,485, filed July 26, 1994, are utilized, filter burn areas may develop with the higher temperature encountered with non-azide pyrotechnic gas generant materials. Filtering and cooling action on the gases provided by a burned through filter is generally reduced because of the leakage through the burn areas . Moreover, much of the filter capacity is not fully utilized because of the flow concentration and lack of uniform distribution and diffusion of the gas flow over the entire area of flow cross-section that is available. This results in a lower contaminant entrapment capability and a lower cooling capability in many prior art inflators in comparison to an air bag inflator and filters in accordance with the present invention to be described herein as follows.

In accordance with the present invention, the new and improved unitary, drop-in type, annular filter 144 is constructed of homogeneous strong, rigid, high temperature resistant, porous, cellular reticulated material that provides a plurality of tortuous passages for entrapping contaminants from the generated gas and for cooling the gas by absorbing heat therefrom. The filter 144 is formed of metal, metal alloy, or ceramic material that is applied to an open-celled carbonaceous type foam base material using a chemical vapor deposition process. The metal or metal alloys may contain at least one of the following metals such as aluminum, copper, iron, tungsten, or nickel. The foam base may be burned out leaving a strong, self-supporting reticulated porous filter structure which is relatively chemically inactive and does not tend to corrode with the gas generant combustion by-products or ignition combustion by-products. These type of products are manufactured by Ultramet Company of 12173 Montegue Street, Pacomia, California 91331.

The reticulated structure of the filter 144 may be formed from a ceramic slurry that is applied to an open-celled polyurethane foam base material and sintered. The ceramic materials may contain zirconia, alumina, or silica. The foam base is burned out leaving a strong, self-supporting reticulated porous filter structure which is relatively chemically inactive and does not tend to corrode with the gas generant combustion by-products or ignition combustion by-products. These type of products are manufactured by Hi-Tech Ceramics Incorporated, P. O. Box 788, Alfred, New York.

The drop-in filter 144 may be constructed of a strong, rigid, vitreous bonded ceramic material. The ceramic material would be an aggregate bonded with a vitreous slurry that is formed into shape in an extrusion process, by pressing, or by isostatic compression and then is sintered. These type of products are manufactured by Refractron Technologies Corporation of 5150 Stuart Avenue, Newark, New York.

In general, the reticulated structure of the porous, rigid, strong, unitary filter 144 may have a porosity rating in pores per inch ranging from 20 to 65 ppi. It has been found that the annular filter 144 formed in the manner and of the materials herein described has excellent gas filtering and gas cooling characteristics and is well able to withstand the more corrosive and chemically active combustion by-products of non-azide type gas generating materials 118 as well as the higher temperatures and pressures that accompany the rapid ignition of these materials.

In accordance with the present invention, at least a portion of the cylindrical wall surface of the annular filter 144 forming a gas receiving or entrance side that is directly opposite and facing the combustion wall ports 140 is provided with an impervious wall which acts as a flow deflector for turning the radial outflow of gases from the ports 140 toward the bottom wall 136 of the housing 112 in the outer filter chamber 124. The bottom wall 136 deflects or turns the gas flow back upwardly in a reverse direction as indicated by the intermediate U-shaped portion of the flow path arrows D. The flow deflection or turning action provided by the impervious wall 144A tends to distribute the gas flow and diffuse the same so that essentially the entire flow cross-sectional area of the filter 144 (measured on a horizontal plane) is utilized by the upwardly flowing gas which is moving at a much lower velocity in comparison to the high velocity of the direct gas flow jets as described adjacent the burn out areas 56 of the prior art inflator 10. The flow deflector 144A is spaced apart a short distance outwardly of the port 140 to provide some space for directing or turning the gas flow downwardly toward the bottom wall 136 of the filter chamber 124.

When the upward flow of gas reaches the level of the outer, diffusion ports 150 in the outer wall 146 of the housing 112, the gas flow turns to flow radially outwardly in a horizontal direction toward the ports 150 and moves out to rapidly inflate an associated air bag (not shown). The filter 144 with the flow deflector 144A thus provides for a much more efficient filtering action in entrapping particulate contaminants which tend to fall out to the bottom of the filter chamber 124. In addition, because of the effective use of a much larger flow cross-section of the filter 144, the overall size of the inflator 100 can be reduced yet the cooling effectiveness is still very high while lesser resistance to flow is attained because of the more uniform diffusion and distribution of gas flow at a lower velocity over substantially all of the available flow cross-section.

The flow deflector wall 144A on the gas inlet side of the filter 144 is formed of high temperature resistant material in the form of a discrete ring or band of gas impervious metal or metal alloy, or a discrete gas impervious ring or band of solid ceramic material or vitreous bonded aggregate material, which may be formed by coating, dipping, spraying or troweling on the material to a desired thickness so that burn through does not take place and the hot gases are deflected downwardly.

Referring now more particularly to FIG. 2 of the drawing, a new and improved air bag inflator 200 in accordance with the features of the present invention includes a metal housing or canister 212 formed with a lower base 214 and an upper cap or cover 216 joined together to form an airtight enclosure for containing a selected quantity of solid, gas generating material such as sodium azide containing pellets or wafers 218 contained in an annular, main combustion chamber 220. The combustion chamber 220 is formed between a centrally disposed, cylindrical ignition chamber 222 and an outer, annular filter medium containing chamber 224.

The centrally disposed ignition chamber 222 normally contains an electrically activatable ignition squib 226 and a charge of ignition enhancing material 228 such as a mixture of boron and potassium nitrate which is ignited by the squib 226 to cause hot ignition combustion products to flow rapidly outwardly through a plurality of ignition ports 230 formed in an inner wall 232 of cylindrical shape joined between upper and lower, circular-shaped top and bottom walls 234 and 236, respectively, of the cover 216 and the base 214. The ignition ports 230 are circumferentially spaced apart around the periphery of ignition chamber inner wall 232 to direct the ignition enhancing combustion products from the ignition squib 226 and the enhancing material 228 outwardly to rapidly ignite the gas generating pellets 218 in the annular combustion chamber 220 surrounding the ignition chamber as indicated by the arrows E.

The hot ignition gases from the ignition enhancing material 228 and the squib 226 cause the gas generant wafers 218 to rapidly ignite and develop a calculated quantity of hot, air bag inflation gas which flows outwardly as indicated by the arrows F through a plurality of circumferentially spaced apart combustion ports 240 formed in an intermediate, combustion chamber wall 242 of cylindrical shape in coaxial alignment with and surrounding the inner ignition chamber wall 232. The hot gases flowing outwardly through the wall ports 240 of the intermediate combustion chamber wall 242 pass into an annular flow deflecting filter 244 in accordance with the features of the present invention that is mounted in the filter chamber 224 and surrounding the combustion chamber wall 242.

The housing 212 includes an outer cylindrical side wall 246 extending between the circular top wall 234 and bottom wall 236 to complete a sealed enclosure. The outer side wall 246 is formed with a plurality of circumferentially spaced apart, gas exit diffuser ports 250 for directing the high temperature, high pressure flow of generating gas outwardly of the canister 212 to rapidly inflate an associated air bag (not shown). Inside of the ring of combustion wall ports 240 on the combustion wall 242, there is provided a thin, adhesive foil type sealing strip 252 for sealing the ports against the entry of outside contaminants during the life of the inflator 200 until activated. After all of the internal components of the inflator 200 are in place, the base 214 and the upper cover 216 are welded or otherwise joined together, usually by an inertia weld on a common plane (FIG. 1) indicated by the reference numeral 254.

In accordance with the present invention, the new and improved unitary, drop-in type, annular filter 244 is constructed of homogeneous strong, rigid, high temperature resistant, cellular porous reticulated material that provides a plurality of tortuous passages for entrapping contaminants from the generated gas and for cooling the gas by absorbing heat therefrom. The filter 244 is formed of metal, metal alloy, or ceramic material that is applied to an open-celled carbonaceous type foam base material using a chemical vapor deposition process. The metal or metal alloys may contain at least one of the following metals such as aluminum, copper, iron, tungsten, or nickel. The foam base may be burned out leaving a strong, self-supporting reticulated porous filter structure which is relatively chemically inactive and does not tend to corrode with the gas generant combustion by-products or ignition combustion by-products. These type of products are manufactured by Ultramet Company of 12173 Montegue Street, Pacomia, California 91331.

The reticulated structure of the filter 244 may be formed from a ceramic slurry that is applied to an open-celled polyurethane foam base material and sintered. The ceramic materials may contain zirconium, alumina, or silicon. The foam base is burned out leaving a strong, self-supporting reticulated porous filter structure which is relatively chemically inactive and does not tend to corrode with the gas generant combustion by-products or ignition combustion by-products. These type of products are manufactured by Hi-Tech Ceramics Incorporated, P. O. Box 788, Alfred, New York.

The drop-in filter 244 may be constructed of a strong, rigid, vitreous bonded ceramic material. The ceramic material would be an aggregate bonded with a vitreous slurry that is formed into shape in an extrusion process, by pressing, or by isostatic compression and then is sintered. These type of products are manufactured by Refractron Technologies Corporation of 5150 Stuart Avenue, Newark, New York.

In general, the reticulated structure of the porous, rigid, strong, unitary filter 244 may have a porosity rating in pores per inch ranging from 20 to 65 ppi. It has been found that the annular filter 244 formed in the manner and of the materials herein described has excellent gas filtering and gas cooling characteristics and is well able to withstand the more corrosive and chemically active combustion by-products of non-azide type gas generating materials 218 as well as the higher temperatures and pressures that accompany the rapid ignition of these materials.

In accordance with the present invention, at least a portion of an inside or inlet side of the filter 244 is provided with a flow deflector wall 244A formed of high temperature resistant material positioned directly opposite and facing, but spaced apart from the combustion wall ports 240. The flow deflector wall 244A on the gas inlet side of the filter 244 is formed of high temperature resistant material in the form of a discrete ring or band of gas impervious metal or metal alloy, or a discrete gas impervious ring or band of solid ceramic material or vitreous bonded aggregate material formed by coating, dipping, spraying or troweling on the material to a desired thickness so that burn through does not take place and the hot gases are deflected downwardly.

The flow deflector wall 244A turns the radial outflow of gases from the ports 240 toward the bottom wall 236 of the housing 212 in the outer filter chamber 224. The bottom wall 236 then deflects or turns the gas flow back upwardly in a reverse direction as indicated by the intermediate U-shaped portion of the flow path arrows F. The flow deflection or turning action provided by the impervious wall 244A tends to distribute the gas flow and diffuse the same so that essentially one half of the total flow cross-sectional area of the filter 244 (measured on a horizontal plane) is utilized by the downwardly flowing gas and one half is utilized by the upwardly flowing gas. Again the gas is moving at a much lower velocity in comparison to the high velocity of the direct gas flow jets as described adjacent the burn out areas 56 of the prior art inflator 10. When the upward flow of gas outside the flow deflector 244A reaches the level of the outer, diffusion ports 250 in the outer wall 246 of the housing 212, the gas flow turns to flow radially outwardly in a horizontal direction toward the ports and moves out to rapidly inflate an associated air bag (not shown).

The filter 244 has a first section 245 of relatively coarse porosity that is more porous than a second section 247 of finer porosity. The coarser section 245 of the filter 244 helps to diffuse the gas flow so that the larger size contaminants and slag particles are collected and drop toward the bottom of the chamber 224. The finer porosity second filter section 247 works to filter out and collect finer particulates from the gas and to absorb a large amount of heat from the gas before it flows out through the diffuser ports 250 to inflate an associated air bag. Because of the effective use of a much larger flow cross-section of the filter 244, the overall size of the inflator 200 can be reduced yet the cooling effectiveness is still very high while lesser resistance to flow is attained because of the more uniform diffusion and distribution of gas flow at a lower velocity over substantially all of the available flow cross-section.

## Claims

1. A filter (144, 244) for use in a pyrotechnic air bag inflator for entrapping contaminants from gas generated therein, comprising:
a high temperature resistant, strong, unitary, rigid, homogeneous, body structure of a cellular, porous filter medium for receiving a flow of gas from an entrance side for movement on a flow path (D, F) through said body toward an exit side; and
a non porous flow deflector wall means (144A, 244A) adjacent said entrance side of said body for altering the shape of said flow path from a straight path between said entrance and exit sides.

2. A gas filter according to claim 1 wherein said flow deflector wall means (144A, 244A) comprises an impervious coating of said filter medium on said entrance side.

3. A gas filter according to claim 1 wherein said flow deflector wall means (144A, 244A) comprises a sheet of solid material.

4. A gas filter according to any preceding claim wherein said body (244) is formed with a plurality of layers (245, 247) having different permeability characteristics.

5. A gas filter according to claim 4 wherein said flow deflector wall means (244A) occupies at least a portion of an interface between said layers (245, 247).

6. A gas filter according to any preceding claim wherein said flow deflector wall means (144A, 244A) is shaped and positioned to create a plurality of tortuous flow paths (D, F) between said entrance and exit sides of said filter body (144, 244).

7. A gas filer according to any preceding claim wherein said filter medium comprises a metal, metal alloy or ceramic material coated on a base of carbonaceous foam in a chemical vapour deposition process.

8. A gas filter according to any one of claims 1 to 6 wherein said filter medium comprises a ceramic slurry applied to a polyurethane base and sintered.

9. A gas filter according to any one of claims 1 to 6 wherein said filter medium comprises vitreous-bonded ceramic material.

10. A pyrotechnic air bag inflator (100, 200) including a gas filter (144, 244) according to any preceding claim.
